# EUROPEAN PATENT APPLICATION

(11) **EP 4 685 293 A1**
(43) Date of publication of application: **28.01.2026**
(21) Application number: 25190036.1
(22) Date of filing: 16.07.2025
(51) Int. Cl.: E02F 3/38, E02F 9/08, E02F 9/24, E02F 9/26

(54) **WORK MACHINE**

(30) Priority: 24.07.2024 JP 2024118448
(71) Applicant: Yanmar Holdings Co., Ltd., Osaka-shi, Osaka (JP)
(72) Inventor: DANGUCHI, Masashi, Chikugo (JP); MIKI, Takahiro, Chikugo (JP)
(74) Representative: Sekiguchi, Kazuya

(57) **Abstract**

[Problem]

To provide a work machine that easily reduces a blind spot for a detection portion.

[Solution]

The work machine 3 includes a machine body 30, a first detection portion 11, and a second detection portion 12. The machine body 30 includes a boarding room 4 in which an occupant can board. The first detection portion 11 and the second detection portion 12 are supported by the boarding room 4 and each detect a detection target around the machine body 30. Each of the first detection portion 11 and the second detection portion 12 is provided on a corresponding one of a pair of a side surfaces Ss1 and Ss2 that are adjacent to each other with one corner portion C1 of the boarding room 4 interposed therebetween in a plan view.

## Description

### TECHNICAL FIELD

The present invention relates to a work machine including a machine body including a boarding room.

### BACKGROUND ART

As a related technology, a work machine (work vehicle) such as a backhoe (mini excavator) including a detection portion (imaging portion) for detecting (monitoring) a detection target around a machine body is known (for example, see Patent Document 1). The work machine according to the related art includes a cabin that is erected on a turning body (upper turning body) at a position shifted to one side in a left-right direction, and a side hood that is placed on the turning body at the position on the other side (opposite side to the cabin) in the left-right direction.

In the work machine according to the related art, the detection portion is provided behind the cabin and in an upper portion on a side hood side. Since the cabin erected on the turning body is, for example, supported in a vibration-proof manner, vibration and impact from the machine body side are less likely to be transmitted to the detection portion supported by the cabin.

### PRIOR ART DOCUMENT

### PATENT DOCUMENT

Patent Document 1: Japanese Unexamined Patent Publication No. 2020-007759

### SUMMARY OF INVENTION

### TECHNICAL PROBLEM

In the work machine according to the related art, when viewed from the detection portion (imaging portion), for example, there may be a blind spot for the detection portion behind the cabin itself or a structure such as an exhaust tail pipe located around the cabin.

An object of the present invention is to provide a work machine that easily reduces a blind spot for a detection portion.

### SOLUTION TO PROBLEM

A work machine according to one aspect of the present invention includes a machine body, a first detection portion, and a second detection portion.

The machine body includes a boarding room in which an occupant can board. The first detection portion and the second detection portion are supported by the boarding room and each detect a detection target around the machine body. Each of the first detection portion and the second detection portion is provided on a corresponding one of a pair of a side surfaces that are adjacent to each other with one corner portion of the boarding room interposed therebetween in a plan view.

### ADVANTAGEOUS EFFECTS OF INVENTION

The present invention can provide a work machine that easily reduces a blind spot for a detection portion.

### BRIEF DESCRIPTION OF DRAWINGS

FIG. 1 is a schematic perspective view of a work machine according to Embodiment 1 as viewed from the left rear.
FIG. 2 is a schematic perspective view of the work machine according to Embodiment 1 as viewed from the right rear.
FIG. 3 is a schematic left side view of the work machine according to Embodiment 1.
FIG. 4 is a schematic plan view of the work machine according to Embodiment 1.
FIG. 5 is a schematic perspective view of a boarding room and a turning portion of the work machine according to Embodiment 1 as viewed obliquely from above.
FIG. 6 is an enlarged view of a region Z1 in FIG. 5, and illustrates a main part of the boarding room of the work machine according to Embodiment 1.
FIG. 7 is a schematic right side view of a boarding room and a turning portion of the work machine according to Embodiment 1.
FIG. 8 is an enlarged view of a region Z1 in FIG. 7, and illustrates main parts of a boarding room and a turning portion of the work machine according to Embodiment 1.
FIG. 9 is a schematic rear view of a boarding room and a turning portion of the work machine according to Embodiment 1.
FIG. 10 is an enlarged view of a region Z1 in FIG. 4, and illustrates main parts of a boarding room and a turning portion of the work machine according to Embodiment 1.
FIG. 11 is a plan view of the work machine according to Embodiment 1 as viewed from above, and is a schematic view schematically illustrating a detection region set around the machine body.

### DESCRIPTION OF EMBODIMENTS

An embodiment of the present invention will be described below with reference to the accompanying drawings. The following embodiment is an example that embodies the present invention, and is not intended to limit the technical scope of the present invention.

### (Embodiment 1)

### [1] Overall configuration

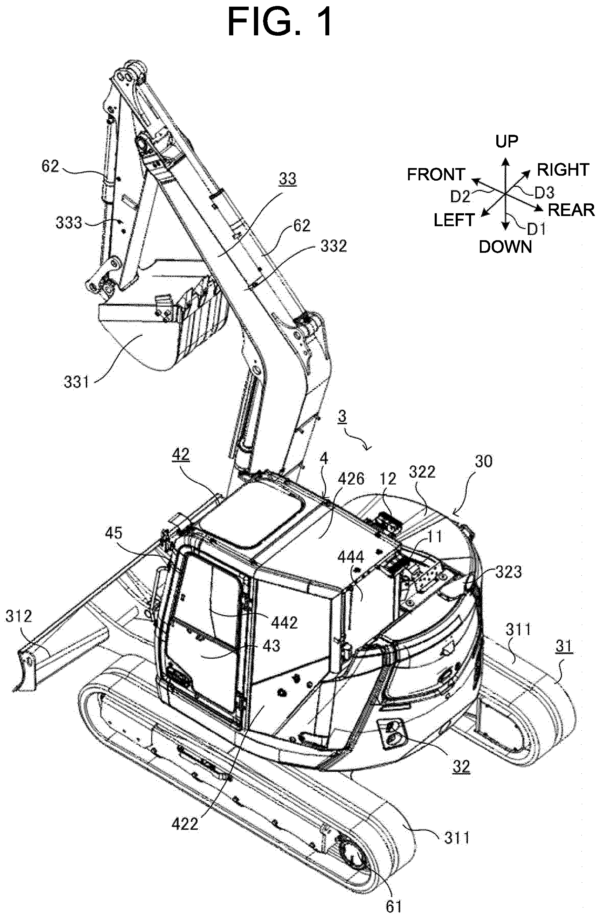

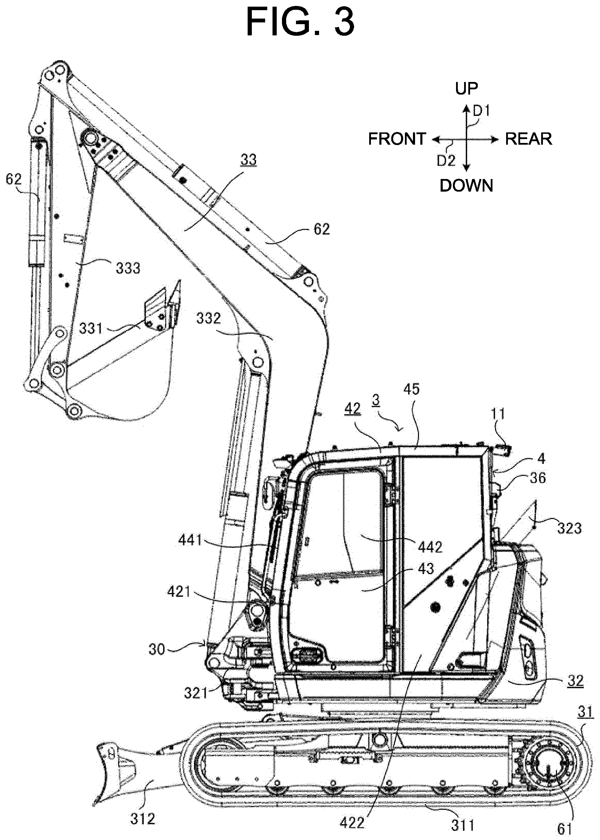

As illustrated in FIGs. 1 to 4, a work machine 3 according to the present embodiment includes a traveling portion 31, a turning portion 32, and a work implement 33. Furthermore, the work machine 3 includes a boarding room 4 in which an occupant can board. In the present embodiment, the traveling portion 31, the turning portion 32, the work implement 33, and the boarding room 4 are included in a machine body 30 of the work machine 3.

The work machine 3 according to the present embodiment further includes a first detection portion 11 and a second detection portion 12. The first detection portion 11 and the second detection portion 12 each detect a detection target around the machine body 30. The electrical components (electrical devices) such as the first detection portion 11 and the second detection portion 12 are mounted on the machine body 30 of the work machine 3.

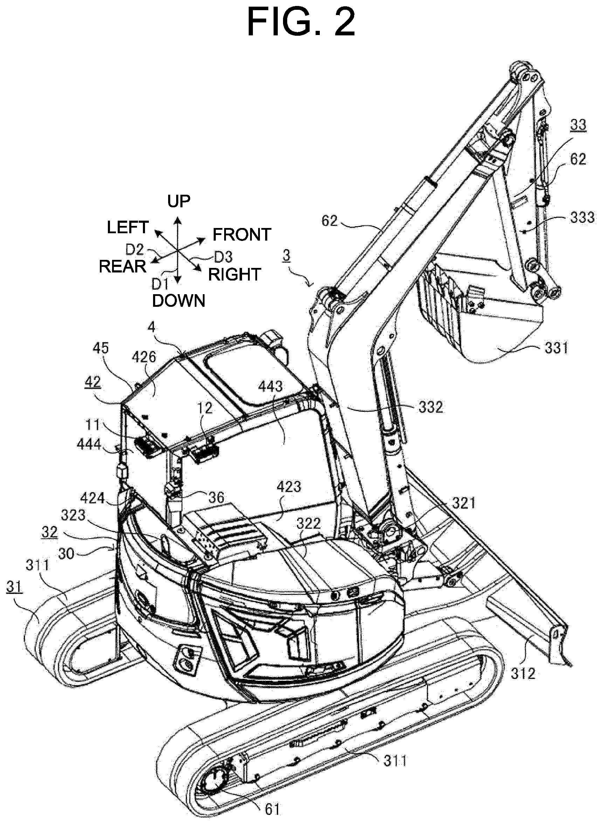

The work machine 3 further includes an alarm device 36 (see FIG. 2), a positioning device, a communication device, an indicator lamp, a light, a display device, an operation device, a control device, various sensors (including a sonar, a camera, and the like), and the like.

The term "work machine" as used in the present disclosure refers to a machine for performing various types of work, and examples thereof include work vehicles such as a backhoe (including a hydraulic excavator, a mini excavator, and the like), a wheel loader, and a carrier. The work machine 3 includes the work implement 33 that is configured to be able to perform one or more types of work.

The work machine 3 is not limited to a "vehicle", and may be, for example, a work ship, a work flying object such as a drone or a multicopter, or the like. Furthermore, the work machine 3 is not limited to a construction machine (construction equipment), and may be, for example, an agricultural machine (agricultural equipment) such as a rice transplanter, a tractor, or a combine harvester. In the present embodiment, unless otherwise specified, an example will be described in which the work machine 3 is a riding type backhoe and is capable of performing work such as excavation work, ground leveling work, trench excavation work, or loading work. More specifically, in the work machine 3 according to the present embodiment, the turning portion 32 including the work implement 33 is assumed to be of an "ultra-small turning type" that can fully turn within 120% of the entire width of the traveling portion 31 (the entire width of a pair of left and right crawlers 311) or a "rear ultra-small turning type" with a rear turning radius ratio of 120% or less.

In the present embodiment, as an example, the occupant who gets in the boarding room 4 is an operator (operating person), and the work machine 3 is moved by an operation performed by the occupant. However, the occupant is not limited to an operator, and for example, when the work machine 3 is moved by remote control or automatic driving, the occupant may be a person who gets in the work machine 3 for the purpose of monitoring, inspection (maintenance), or the like. Furthermore, the boarding room 4 may be able to simultaneously accommodate a plurality of occupants, and in such a case, a single boarding room 4 may include a plurality of occupant seats.

In the present embodiment, for convenience of description, an up-down direction D1 is defined as the vertical direction while the work machine 3 is in a usable state. Furthermore, a front-rear direction D2 and a left-right direction D3 are defined with respect to the direction as viewed from an occupant (operator) who gets in the boarding room 4 of the work machine 3. In other words, each of the directions used in the present embodiment is a direction defined with respect to the boarding room 4 of the work machine 3. The "front side" is a direction toward which the machine body 30 moves when the work machine 3 moves forward, and the "rear side" is a direction toward which the machine body 30 moves when the work machine 3 moves rearward. Similarly, the "right side" is a direction toward which a front end portion of the machine body 30 moves when the work machine 3 turns right, and the "left side" is a direction toward which the front end portion of the machine body 30 moves when the work machine 3 turns left. Since the boarding room 4 is disposed on the turning portion 32, the front-rear direction D2 and the left-right direction D3 with respect to the traveling portion 31 change as the turning portion 32 turns. Thus, in the following, the directions are defined in a state in which the front of the boarding room 4 faces a traveling direction of the traveling portion 31 as illustrated in FIG. 1. However, these directions are not intended to limit use directions (directions during use) of the work machine 3.

The work machine 3 includes an engine as a power source. In the present embodiment, as an example, the engine is a diesel engine. The engine is driven by fuel (light oil in this case) supplied from a fuel tank. In the work machine 3, for example, a hydraulic pump is driven by the engine, and hydraulic oil is supplied from the hydraulic pump to hydraulic actuators (including a hydraulic motor 61, a hydraulic cylinder 62, and the like) of the components of the machine body 30 to drive the machine body 30. For example, a user (operator) who gets in the boarding room 4 of the machine body 30 operates the operation device to control the work machine 3.

In the present embodiment, since the work machine 3 is assumed to be a riding type backhoe as described above, the work implement 33 is driven according to an operation performed by an occupant (operator) who gets in the boarding room 4 and performs work such as excavation work. The work implement 33 is supported by the turning portion 32 provided with the boarding room 4. Thus, when the turning portion 32 turns, the work implement 33 turns together with the boarding room 4.

The boarding room 4 of the machine body 30 includes the display device, the operation device, and the like, and an occupant can operate the operation device while viewing various types of information related to the work machine 3 displayed on the display device. For example, when information related to an operating state of the work machine 3 such as a cooling water temperature and a hydraulic oil temperature is displayed on a display screen of the display device, an occupant can check, on the display device, information related to the operating state of the work machine 3 required to operate the operation device.

The traveling portion 31 has a traveling function and is capable of traveling (also turning) on the ground. The traveling portion 31 includes, for example, a pair of left and right crawlers 311, a blade 312, and the like. The traveling portion 31 further has hydraulic motors 61 (hydraulic actuators) for traveling that drive the crawlers 311, and the like.

The turning portion 32 is disposed above the traveling portion 31, and can turn with respect to the traveling portion 31 in a plan view. That is, the turning portion 32 is located above the traveling portion 31, and is configured to be able to turn with respect to the traveling portion 31 around a rotation axis along the vertical direction. The turning portion 32 includes a hydraulic motor as a hydraulic actuator for turning, and the like. The turning portion 32 includes the engine, the hydraulic pump, and the like, in addition to the boarding room 4. Furthermore, the turning portion 32 is provided with a boom bracket as a fulcrum portion 321 (see FIG. 2) to which the work implement 33 is attached. The turning portion 32 has a substantially circular shape in a plan view in which a front end portion is cut into a flat shape. The turning portion 32 can turn around a center of the circular shape as a rotation axis.

The work implement 33 is supported by the turning portion 32, and is configured to be able to perform one or more types of work. The work implement 33 is supported by the fulcrum portion 321 (boom bracket) of the turning portion 32 and performs work. The work implement 33 includes a bucket 331. The bucket 331 is a type of attachment (work tool) attached to the machine body 30 of the work machine 3, and is composed of an arbitrary tool selected from a plurality of types of attachments according to the work content. For example, the bucket 331 is detachably attached to the machine body 30, and is replaced according to the work content. Examples of the (end) attachments for the work machine 3 include, in addition to the bucket 331, various implements, such as a breaker, an auger, a crusher, a fork, a fork claw, a steel frame cutter, an asphalt cutting machine, a grass cutter, a ripper, a mulcher, a tiltrotator, and a tamper.

The work implement 33 further includes a boom 332, an arm 333, a hydraulic actuator (including the hydraulic cylinder 62, the hydraulic motor, and the like), and the like. The bucket 331 is attached to a tip end of the arm 333. The bucket 331 is supported by the arm 333 to be rotatable around a rotation axis extending in the horizontal direction.

The boom 332 is rotatably supported by the fulcrum portion 321 of the turning portion 32. Specifically, the boom 332 is supported by the fulcrum portion 321 to be rotatable about a rotation axis along the horizontal direction. The boom 332 has a shape extending upward from a base end portion supported by the fulcrum portion 321. The arm 333 is coupled to a tip end of the boom 332. The arm 333 is supported by the boom 332 to be rotatable about a rotation axis along the horizontal direction.

The work implement 33 is moved by power received from the engine as a power source. Specifically, the hydraulic pump is driven by the engine, and hydraulic oil is supplied from the hydraulic pump to the hydraulic actuator (the hydraulic cylinder 62 and the like) of the work implement 33 to move the components (the bucket 331, the boom 332, and the arm 333) of the work implement 33.

In the present embodiment, in particular, the work implement 33 has an articulated structure in which the boom 332 and the arm 333 are configured to be individually rotatable. That is, each of the boom 332 and the arm 333 is rotated about the rotation axis along the horizontal direction, for example, to allow the articulated work implement 33 including the boom 332 and the arm 333 as a whole to be extended or retracted. Furthermore, the bucket 331 as an attachment is supported by the machine body 30 (turning portion 32) via the boom 332 and the arm 333, and the bucket 331 is rotated with respect to the arm 333 to be opened and closed.

As with the work implement 33, each of the traveling portion 31 and the turning portion 32 is moved by power received from the engine as a power source. That is, hydraulic oil is supplied from the hydraulic pump to the hydraulic motor 61 of the traveling portion 31, the hydraulic motor of the turning portion 32, and the like to move the turning portion 32 and the traveling portion 31.

Furthermore, the work machine 3 further includes a driving device (mechanism), such as power take-off (PTO) for supplying power to the bucket 331 (attachment). Specifically, the drive device sends, to the bucket 331, hydraulic oil from the hydraulic pump driven by the engine, and adjusts the flow rate of the hydraulic oil to adjust the amount of power supplied to the bucket 331.

The boarding room 4 is a space for an occupant to board, and is located on the turning portion 32 in the present embodiment. Thus, in a plan view, when the turning portion 32 turns, the boarding room 4 also turns. Specifically, when the turning portion 32 is divided into two portions in the left-right direction D3, the boarding room 4 is provided in a left side portion of the turning portion 32. The boarding room 4 includes at least a boarding seat on which an occupant is seated.

Types of the boarding room 4 of the work machine 3 such as a construction machine include a cabin type, a canopy type, a floor type, and the like. A cabin type boarding room 4 includes a cabin 42, and an occupant gets into a cabin space inside the cabin 42. A canopy type boarding room 4 includes a canopy (roof), and an occupant gets into a space below the canopy. A floor type boarding room 4 does not include the cabin 42, a canopy, or the like, and an occupant gets into a space opened upward. That is, the boarding room 4 may include not only an aspect in which the boarding room 4 is surrounded by panels or the like but also various aspects in which the boarding room 4 is prepared as a space in which an occupant can board. In the present embodiment, the cabin type boarding room 4 will be described as an example.

The boarding room 4 is shifted to one side in the width direction (left-right direction D3) of the machine body 30. In the present embodiment, as an example, the boarding room 4 is disposed in a left side portion of the machine body 30 of the work machine 3. That is, the boarding room 4 is shifted to the left side in the width direction of the machine body 30. Furthermore, the boarding room 4 is located above the left crawler 311 (see FIG. 1). With such an arrangement, an occupant gets in and out of the boarding room 4 from the left side of the boarding room 4.

Thus, in the present embodiment, a door 43 of the boarding room 4 is disposed on the left side of the boarding room 4 in the left-right direction D3. That is, an occupant gets in and out of the boarding room 4 through the door 43 disposed on the left side of the boarding room 4.

The cabin type boarding room 4 includes a boarding seat as a seat on which an occupant is seated, and the cabin 42 shaped to cover the occupant seat. The cabin 42 includes a (cabin) frame 45, a cabin roof 426, and the like. In other words, the cabin 42 constitutes an outer frame of the boarding room 4, and an occupant gets in (inside) the cabin 42.

The frame 45 is a structure as a framework of the cabin 42, and surrounds the cabin space. The cabin roof 426 is disposed above the frame 45, and is supported by the frame 45. The cabin roof 426 has a substantially rectangular shape in a plan view, and has a size that covers the entire boarding room 4.

The cabin 42 includes a front panel 421, a left side panel 422, a right side panel 423, and a rear panel 424. The front panel 421 constitutes a front surface of the cabin 42, the left side panel 422 constitutes a left side surface of the cabin 42, the right side panel 423 constitutes a right side surface of the cabin 42, and the rear panel 424 constitutes a rear surface of the cabin 42.

The front panel 421 is provided with a windshield 441. Similarly, the left side panel 422 is provided with a left side glass 442, the right side panel 423 is provided with a right side glass 443, and the rear panel 424 is provided with a rear glass 444. The front panel 421, the left side panel 422, the right side panel 423, and the rear panel 424 are appropriately attached to both sides of the frame 45 in the front-rear direction D2 and both sides of the frame 45 in the left-right direction D3. The panels on four sides surround, together with the door 43, the cabin space.

The door 43 is provided in an opening portion provided on the left side of the cabin 42, and is rotatable between a "close position" at which the opening portion is covered by the door 43 and an "open position" at which the opening portion is opened to allow an occupant to pass through. Types of the door 43 include a "front opening type" in which a front side of the door 43 in the front-rear direction D2 is opened and a "rear opening type" in which a rear side of the door 43 in the front-rear direction D2 is opened. In the present embodiment, as an example, the door 43 is of the front opening type. Furthermore, in the present embodiment, the door 43 is opened outward, and the door 43 is opened by an operation of pulling a front end portion as a free end of the door 43 toward the front side (outer side of the boarding room 4) as viewed from the front (left side in the present embodiment) of the door 43 outside the boarding room 4.

With the configuration described above, when an occupant gets in the boarding room 4, the occupant gets into the cabin space inside the cabin 42 while the door 43 is opened (located at the open position), and closes the door 43 (causes the door 43 to be at the close position) to get in the boarding room 4. On the other hand, when an occupant gets off the boarding room 4, the occupant gets out of the cabin 42 while the door 43 is opened (located at the open position), and closes the door 43 (causes the door 43 to be at the close position) to get off the boarding room 4. In particular, in the cabin type boarding room 4 including the cabin 42 as in the present embodiment, at least the frame 45 has a function as a framework of the cabin 42, and has sufficient strength (rigidity) to support the cabin roof 426, the door 43, and the like. The cabin 42 may be detachable from the machine body 30 (turning portion 32) of the work machine 3.

Furthermore, exterior components such as various sensors and mirrors can be mounted on the cabin 42.

Each of the first detection portion 11 and the second detection portion 12 has various sensors (including a sonar, a camera, and the like) for detecting a detection target around the machine body 30. In the present embodiment, as an example, each of the first detection portion 11 and the second detection portion 12 has at least two types of sensors, i.e., a camera (imaging device) that captures an image of the periphery of the machine body 30 and a distance measurement sensor that measures the distance and orientation to an object present in the periphery of the machine body 30.

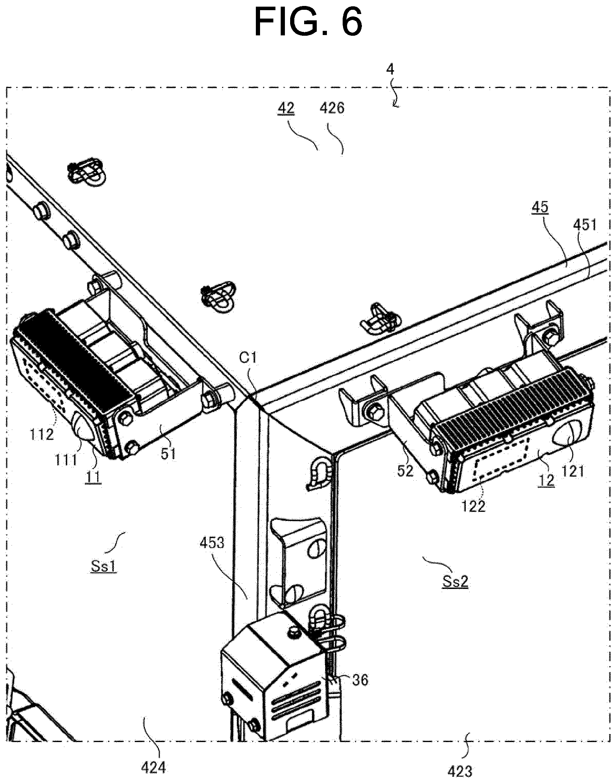

The camera of the first detection portion 11 is referred to as a first camera 111 (see FIG. 6), the camera of the second detection portion 12 is referred to as a second camera 121 (see FIG. 6), the distance measurement sensor of the first detection portion 11 is referred to as a first distance measurement sensor 112 (see FIG. 6), and the distance measurement sensor of the second detection portion 12 is referred to as a second distance measurement sensor 122 (see FIG. 6).

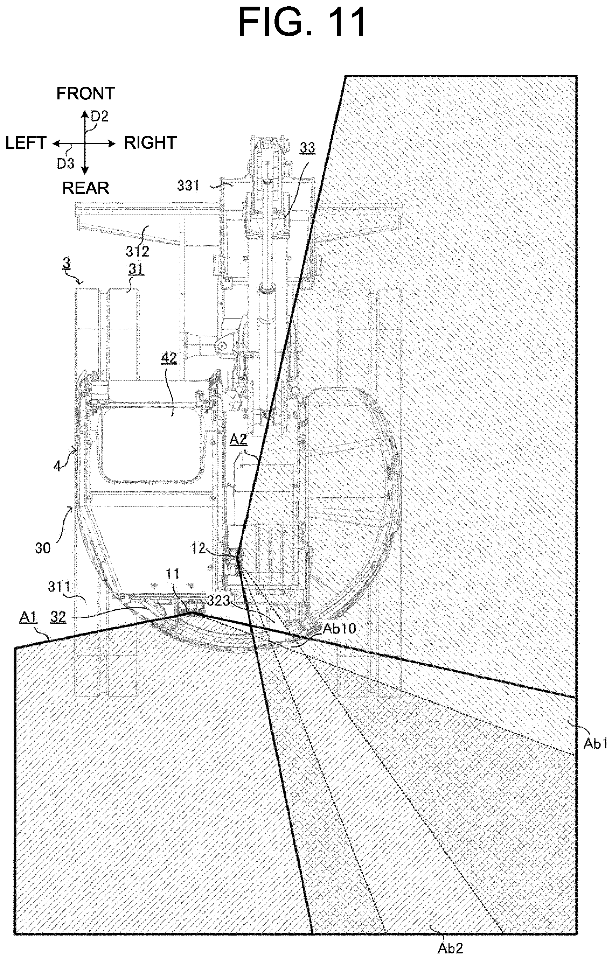

Each of the first camera 111 and the second camera 121 is connected to the control device and outputs an image captured by the camera to the control device. The first camera 111 is a camera (including an image sensor and an optical element) that captures an image of a first detection region A1 (see FIG. 11) that is a detection region of the first detection portion 11. The second camera 121 is a camera (including an image sensor and an optical element) that captures an image of a second detection region A2 (see FIG. 11) that is a detection region of the second detection portion 12. The first camera 111 and the second camera 121 are connected to the control device, and output images captured by the respective cameras to the control device.

Each of the first distance measurement sensor 112 and the second distance measurement sensor 122 is a three dimensional sensor that measures a distance to a detection target by a time of flight (TOF) method in which a distance to a distance measurement point is measured on the basis of round-trip time for radio waves, light, sound, or the like to reach the distance measurement point and return from the distance measurement point. Each of the first distance measurement sensor 112 and the second distance measurement sensor 122 specifies a distance to a detection target, an orientation in which the detection target is present, and the like by using radio waves as a medium, for example, as in a millimeter wave radar. Each of the first distance measurement sensor 112 and the second distance measurement sensor 122 is connected to the control device and outputs a detection result to the control device.

The first distance measurement sensor 112 specifies a distance, an orientation, and the like to an object present in a detection region of the first detection portion 11. That is, the first distance measurement sensor 112 performs detection of a region (the first detection region A1), as a detection region, that is the same as the imaging region of the first camera 111. The second distance measurement sensor 122 specifies a distance, an orientation, and the like to an object present in a detection region of the second detection portion 12. That is, the second distance measurement sensor 122 performs detection of a region (the second detection region A2), as a detection region, that is the same as the imaging region of the second camera 121.

The detection portion (the first detection portion 11 and the second detection portion 12) detects a detection target in the detection region, for example, based on the output (image data and/or distance measurement data) of the camera and/or the distance measurement sensor. Specifically, the detection portion extracts a feature amount in the image by, for example, performing image processing on the image data, and determines whether a detection target ("person" in the present embodiment) is captured in the image on the basis of the feature amount. Here, when the detection target is captured in the image, the detection portion determines that the detection target is present in the detection region.

Thus, by the first detection portion 11 in which the first camera 111 and the first distance measurement sensor 112 are combined, the three dimensional position and attributes (shape, size, color, motion, and the like) of the detection target can be specified when the detection target is present in the first detection region A1. Similarly, when the detection target is present in the second detection region A2, the second detection portion 12 can specify the three dimensional position and the attributes of the detection target.

That is, the detection result in the first detection portion 11 can include the presence or absence of a detection target in the first detection region A1 set around the machine body 30, the position of the detection target in the first detection region A1 when the detection target is present in the first detection region A1, the attributes of the detection target, and the like. Similarly, the detection result in the second detection portion 12 can include the presence or absence of a detection target in the second detection region A2 set around the machine body 30, the position of the detection target in the second detection region A2 when the detection target is present in the second detection region A2, the attributes of the detection target, and the like.

In short, the first detection portion 11 and the second detection portion 12 detect the detection target in the detection regions (the first detection region A1 and the second detection region A2) around the machine body 30. Each of the first detection portion 11 and the second detection portion 12 determines the presence or absence of a detection target in the detection region and outputs, to the control device, a detection result indicating whether the detection target is present in the detection region. In the present embodiment, as an example, the detection target is a "person". That is, when the "person" enters the detection region around the work machine 3 as a result of the movement of the work machine 3 or the movement of the "person" around the work machine 3, the first detection portion 11 and/or the second detection portion 12 detect the "person" as a detection target. When a plurality of detection targets are present in the detection region, the first detection portion 11 and/or the second detection portion 12 may also detect the number of detection targets (the number of persons).

Furthermore, in the present embodiment, at least the images captured by the first camera 111 and the second camera 121 can be displayed on a display device or the like. Thus, the operator who rides in the boarding room 4 can confirm the situation around the machine body 30 on the display device.

The first detection portion 11 and the second detection portion 12 are both placed on the turning portion 32. Particularly, as illustrated in FIGS. 2 to 4, the first detection portion 11 and the second detection portion 12 are attached to an outer surface of the boarding room 4 on the turning portion 32. The arrangement of the first detection portion 11 and the second detection portion 12 will be described in detail in the section "[2] Arrangement of detection portion".

The alarm device 36 has a function of outputting an alarm sound. The alarm device 36 is disposed outside the cabin 42, and issues an alarm mainly to a person who is present around the work machine 3. The alarm device 36 includes at least one of a sound output portion that issues an alarm using the sound of an alarm buzzer or the like and a light output portion that issues an alarm using the light output of an alarm lamp or the like. Thus, the alarm device 36 can issue an alarm to a person who is present around the work machine 3 in various environments such as a bright site during daytime or a site near a noisy place.

The positioning device detects the current position (latitude, longitude, altitude, and the like), the current orientation, and the like, of the machine body 30. The positioning device detects the current position, the current orientation, and the like of the machine body 30 by using a satellite positioning system such as a global navigation satellite system (GNSS). Identification of the current position, current orientation, and the like of the machine body 30 enables, for example, management of a work status (progress and the like) of the work machine 3 including recording of a travel path of the work machine 3, automatic driving of the work machine 3, and the like. The automatic driving of the work machine 3 in this case includes "autonomous traveling" in which the work machine 3 travels autonomously without requiring an operation performed by an operator, and "semi-automatic traveling" in which only steering of the work machine 3 is automated, for example, as in straight travel assist. In the "semi-automatic traveling", the work machine 3 cannot travel without an operation performed by an operator. However, the "semi-automatic traveling" reduces the burden on the operator for steering, and allows the work machine 3 to travel along a target route such as a straight route, leading to higher work efficiency.

The communication device is configured to be able to communicate with a device (a server or the like) outside the machine body 30. The term "able to communicate" in the present disclosure means that information can be transmitted and received directly or indirectly via a communication network (network), a relay, or the like by an appropriate communication method such as wired communication or wireless communication (communication using a radio wave or light as a medium). For example, the communication device can communicate with a server or the like via a communication network such as the Internet, a local area network (LAN), a wide area network (WAN), a public telephone line, a mobile phone network, a packet network, or a wireless LAN.

The indicator lamp is turned on (emits light) in accordance with the action state of the work machine 3. The indicator lamp is provided outside the cabin 42 and provides an indication mainly to a person around the work machine 3. In the present embodiment, in particular, the indicator lamp is configured to be able to emit light in a plurality of colors (for example, three colors), and emits light in different colors in accordance with the action state of the work machine 3.

The light outputs light (for example, white light) from the machine body 30 toward the outside and functions as a work light that illuminates the periphery of the machine body 30. The light illuminates a work target on which work is performed by the work machine 3, thereby enabling the work target to be visually observed even in a dark environment such as nighttime, for example.

The control device is mainly composed of, for example, a computer system including one or more processors such as a central processing unit (CPU), and one or more memories such as a read only memory (ROM) and a random access memory (RAM), and executes various types of processing (information processing). In the present embodiment, the control device is an integrated controller that controls the entire work machine 3, and is composed of, for example, an electronic control unit (ECU). However, the control device may be provided separately from an integrated controller, and may be mainly composed of a single processor or a plurality of processors.

The work machine 3 further includes a cutoff lever (gate lock lever), a fuel tank, a hydraulic oil tank, a cooling water tank, a battery, and the like, in addition to the components described above. The cutoff lever is operable between an "up position" and a "down position", and when the cutoff lever is at the "up position", the movement of the work machine 3 is forcibly restricted without requiring an operation of the operation device.

### [2] Arrangement of detection portion

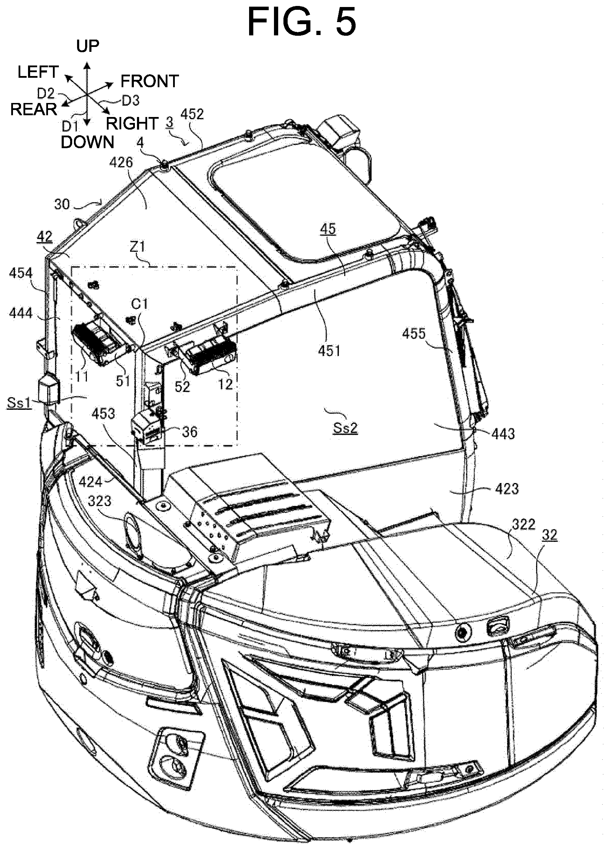

Next, the arrangement of the first detection portion 11 and the second detection portion 12 in the work machine 3 according to the present embodiment will be described in detail with reference to FIGs. 5 to 11.

In the present embodiment, in addition to the first detection portion 11 and the second detection portion 12, electrical equipment such as the alarm device 36, an indicator lamp, and a light is attached to the boarding room 4. Specifically, the first detection portion 11, the second detection portion 12, the alarm device 36, an indicator lamp, a light, and the like are attached to the outside of the cabin 42 of the boarding room 4. Thus, the following description will focus on a portion of the work machine 3 around the boarding room 4 (cabin 42).

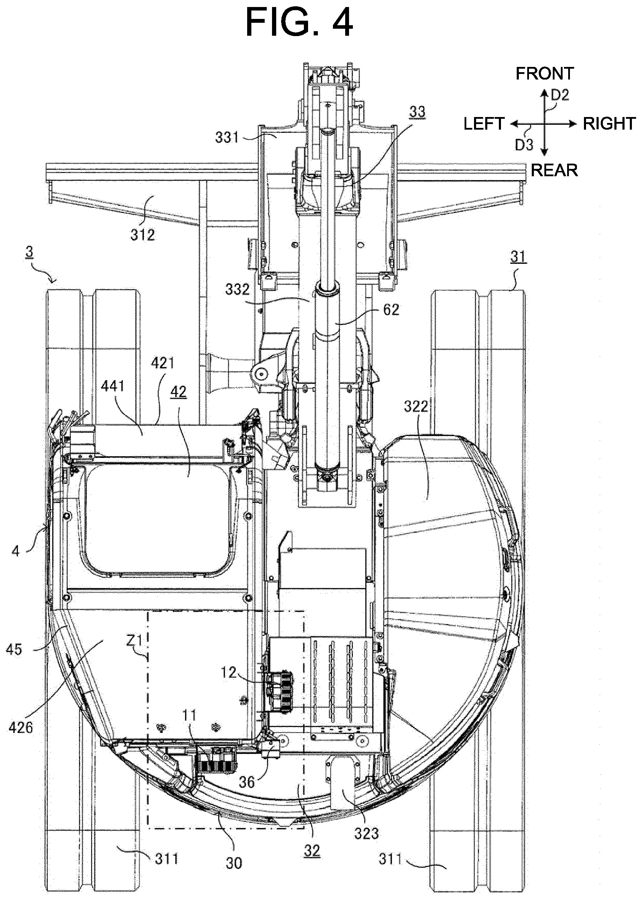

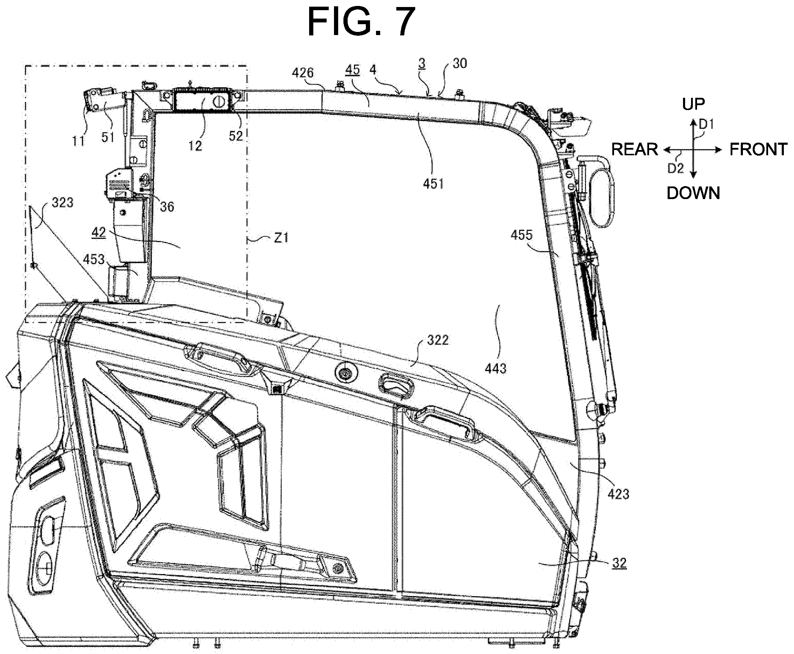

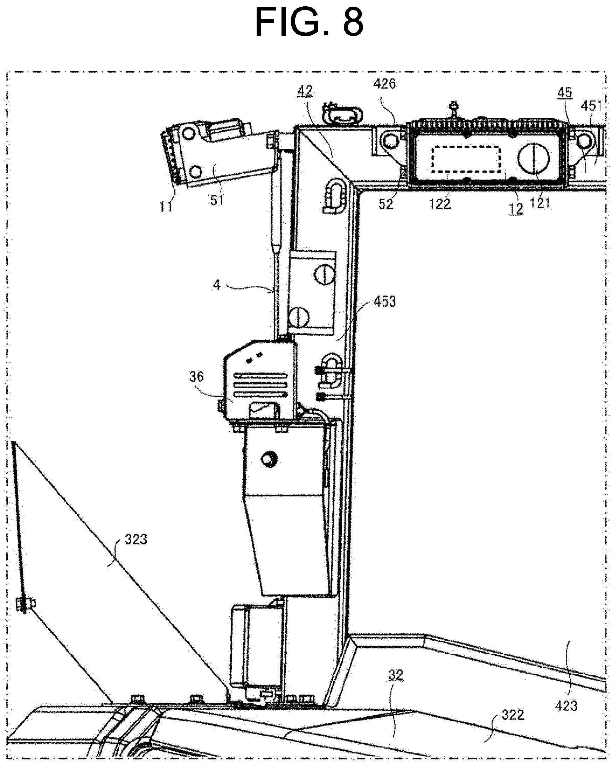

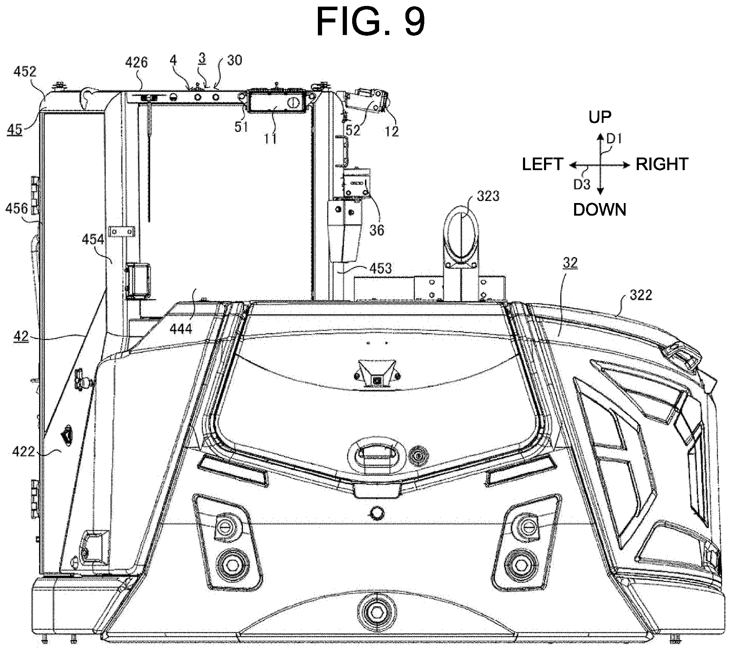

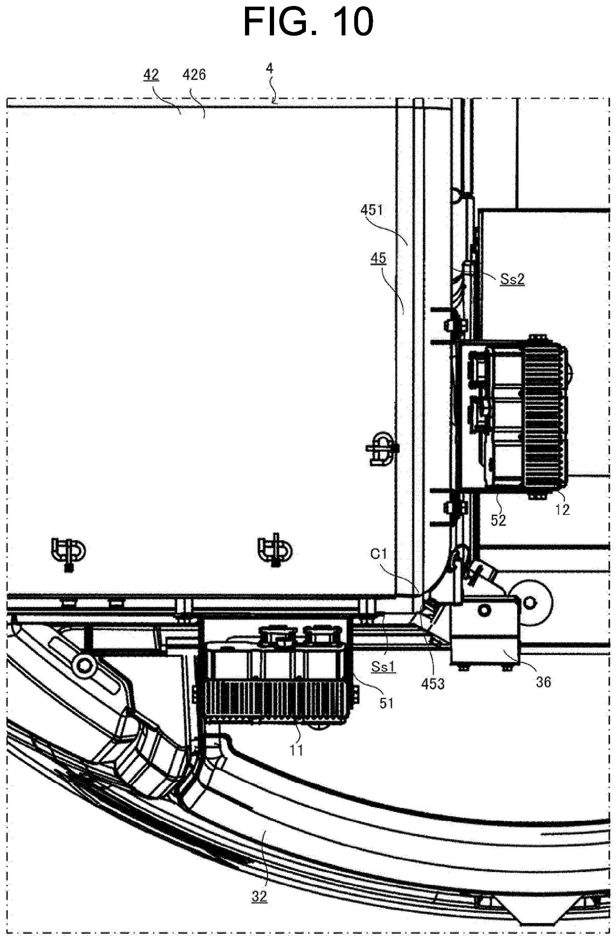

FIG. 5 is a perspective view of the boarding room 4 and the turning portion 32 as viewed obliquely from above, and FIG. 6 is an enlarged view of a region Z1 in FIG. 5. FIG. 7 is a right side view of the boarding room 4 and the turning portion 32, and FIG. 8 is an enlarged view of a region Z1 in FIG. 7. FIG. 9 is a back (rear) view of the boarding room 4 and the turning portion 32. FIG. 10 is an enlarged view of a region Z1 in FIG. 4. FIG. 11 is a plan view of the work machine 3 as viewed from above, and schematically illustrates detection regions (the first detection region A1 and the second detection region A2) set around the machine body 30.

As described above, the work machine 3 according to the present embodiment includes the machine body 30 having the boarding room 4 in which the occupant can board, the first detection portion 11, and the second detection portion 12. The first detection portion 11 and the second detection portion 12 are supported by the boarding room 4 and each detect a detection target around the machine body 30. Each of the first detection portion 11 and the second detection portion 12 is provided on a corresponding one of a pair of a side surfaces Ss1 and Ss2 that are adjacent to each other with one corner portion C1 of the boarding room 4 interposed therebetween in a plan view.

In the present embodiment, as an example, the first detection portion 11 and the second detection portion 12 are placed on a rear side surface (back surface) of the cabin 42 and a right side surface of the cabin 42 that are adjacent to each other with a corner portion C1 on the rear right side (right rear) of the boarding room 4 interposed therebetween in a plan view. That is, the right rear corner portion of the cabin 42 in a plan view is one example of the corner portion C1 located between the pair of side surfaces Ss1 and Ss2. A rear side surface of the cabin 42 that is composed of the surface of the rear panel 424 (including the rear glass 444) facing backward and a right side surface of the cabin 42 that is composed of the surface of the right side panel 423 (including the right side glass 443) facing right are examples of the pair of side surfaces Ss1 and Ss2. In the present embodiment, the first detection portion 11 is provided on the (first) side surface Ss1 that is the rear side surface, and the second detection portion 12 is provided on the (second) side surface Ss2 that is the right side surface.

In the present embodiment, since each of the first detection portion 11 and the second detection portion 12 are placed on each of the pair of side surfaces Ss1 and Ss2 adjacent to each other with one corner portion C1 of the boarding room 4 interposed therebetween in a plan view as described above, the blind spot of the detection portion (the first detection portion 11 and the second detection portion 12) can be easily reduced. That is, in the work machine 3 according to the present embodiment, the first detection portion 11 and the second detection portion 12 are arranged at positions between which one corner portion C1 of the boarding room 4 is located in a plan view. Thus, when viewed from the detection portion (the first detection portion 11 and the second detection portion 12), for example, a blind spot for the detection portion behind the cabin 42 itself or a structure such as an exhaust tail pipe 323 (see FIG. 5) located around the cabin 42 can be less likely to occur. As a result, it is possible to provide the work machine 3 in which a blind spot for the detection portion (the first detection portion 11 and the second detection portion 12) is easily reduced.

To be more specific, the work machine 3 according to the present embodiment further includes a first bracket 51 and a second bracket 52 for supporting the first detection portion 11 and the second detection portion 12.

The first bracket 51 is supported by the boarding room 4 and supports the first detection portion 11. The second bracket 52 is separate from the first bracket 51, is supported by the boarding room 4, and supports the second detection portion 12. Thus, the first detection portion 11 and the second detection portion 12 are provided on the cabin 42 of the boarding room 4 so as to be separated from each other in a plan view.

That is, the first detection portion 11 is supported by the first bracket 51 and thus is placed on the first side surface Ss1 of the boarding room 4. The second detection portion 12 is supported by the second bracket 52 and thus is placed on the second side surface Ss2 of the boarding room 4. The first bracket 51 and the second bracket 52 are separate from each other, and are each individually supported by the boarding room 4.

The first bracket 51 is provided at an upper end portion of the first side surface Ss1. The second bracket 52 is provided at an upper end portion of the second side surface Ss2. Therefore, by using the first bracket 51 and the second bracket 52, the first detection portion 11 and the second detection portion 12 can be arranged at the upper end portion of the boarding room 4 in a state of being separated from each other in a plan view.

Since the first bracket 51 to which the first detection portion 11 is attached and the second bracket 52 to which the second detection portion 12 is attached are separate from each other, the attachment structure of the detection portion (the first detection portion 11 and the second detection portion 12) can be reduced in size, and the weight, size, and the like of the work machine 3 can be easily reduced. As a result, the attachment structure of the detection portion (the first detection portion 11 and the second detection portion 12) can be improved, and the degree of freedom of the arrangement of the detection portion (the first detection portion 11 and the second detection portion 12) can be improved.

At least one of the first detection portion 11 and the second detection portion 12 is located between the center of each of the pair of side surfaces Ss1 and Ss2 and the corner portion C1 in a plan view. In the present embodiment, as an example, both of the first detection portion 11 and the second detection portion 12 are each located between the center of each of the pair of side surfaces Ss1 and Ss2 and the corner portion C1 in a plan view.

That is, the first detection portion 11 is arranged between the center of the first side surface Ss1 and the corner portion C1 in a plan view, and the second detection portion 12 is arranged between the center of the second side surface Ss2 and the corner portion C1 in a plan view. In other words, the first detection portion 11 is located on the right side (corner portion C1 side) of the center of the first side surface Ss1 in the left-right direction D3, and the second detection portion 12 is located on the rear side (corner portion C2 side) of the center of the second side surface Ss2 in the front-rear direction D2.

Thus, at least one of the first detection portion 11 and the second detection portion 12 is shifted to the corner portion C1 side, that is, placed near the corner portion C1, and therefore, the blind spot of the detection portion (the first detection portion 11 and the second detection portion 12) is easily reduced. That is, in the work machine 3 according to the present embodiment, when viewed from the detection portion (the first detection portion 11 and the second detection portion 12), for example, a blind spot for the detection portion behind the cabin 42 itself or a structure such as the exhaust tail pipe 323 located around the cabin 42 can be easily reduced.

In particular, in the present embodiment, the boarding room 4 is disposed to be shifted to one side of the machine body 30 in the width direction (left-right direction D3). The corner portion C1 is located on the other side in the width direction (the left-right direction D3).

Specifically, the boarding room 4 is disposed to be shifted to the left side of the machine body 30 in the width direction (left-right direction D3). Therefore, the corner portion C1 is located on the right side of (the cabin 42 of) the boarding room 4, that is, on the inner side of the machine body 30 in the width direction.

Thus, the first detection portion 11 and the second detection portion 12 that are arranged with the corner portion C1 interposed therebetween in a plan view can be arranged at positions closer to the inner side of the machine body 30 in the width direction. Therefore, the first detection portion 11 and the second detection portion 12 can easily detect the detection target that is present on the inner side of the machine body 30 in the width direction that is likely to be a blind spot for the operator who rides in the boarding room 4.

Further, in the present embodiment, the corner portion C1 is located on the rear end side of the boarding room 4. That is, since the right rear corner portion of the cabin 42 in a plan view is one example of the corner portion C1 located between the pair of side surface Ss1 and Ss2, the corner portion C1 is located on the rear end side of (the cabin 42 of) the boarding room 4.

Thus, the first detection portion 11 and the second detection portion 12 that are arranged with the corner portion C1 interposed therebetween in a plan view can be arranged at positions closer to the rear end of the boarding room 4. Therefore, the first detection portion 11 and the second detection portion 12 can easily detect the detection target that is present on the rear side of the machine body 30 that is likely to be a blind spot for the operator who rides in the boarding room 4.

As illustrated in FIGS. 5, 9, and the like, the frame 45 constituting the cabin 42 of the boarding room 4 has a pair of roof frames 451 and 452 and vertical frames 453 to 456.

The pair of roof frames 451 and 452 are frame members that are located on both end portions of the cabin roof 426 in the width direction (left-right direction D3) and each have length in the front-rear direction D2. Specifically, the roof frame 451 is located on the right end portion of the cabin roof 426, and the roof frame 452 is located on the left end portion of the cabin roof 426.

The vertical frames 453 to 456 are frame members that are located at four corners (four corner portions) of the cabin roof 426 and each have length in the up-down direction D1. To be specific, the vertical frame 453 is located at a right rear corner portion (corner portion C1) of the cabin roof 426, the vertical frame 454 is located at a left rear corner portion of the cabin roof 426, the vertical frame 455 is located at a right front corner portion of the cabin roof 426, and the vertical frame 456 is located at a left front corner portion of the cabin roof 426.

That is, in the present embodiment, the cabin 42 of the boarding room 4 has a vertical frame 453 having a length along the up-down direction D1. The first detection portion 11 and the second detection portion 12 are adjacent to the vertical frame 453. Thus, the first detection portion 11 and the second detection portion 12 are arranged adjacent to the vertical frame 453, and therefore the first detection portion 11 and the second detection portion 12 can be attached to the frame 45 with relatively high strength.

In the present embodiment, the boarding room 4 has a window portion (the rear glass 444 and the right side glass 443) in each of the pair of side surfaces Ss1 and Ss2. The first detection portion 11 and the second detection portion 12 are located above the window portion. That is, since the rear glass 444 is provided on the first side surface Ss1, the first detection portion 11 is arranged above the rear glass 444. Similarly, since the right side glass 443 is provided on the second side surface Ss2, the second detection portion 12 is arranged above the right side glass 443.

Thus, the first detection portion 11 and the second detection portion 12 can be attached to the boarding room 4 with relatively high strength. Furthermore, it is possible to prevent a decrease in the visibility of the operator who rides in the boarding room 4 due to the attachment of the first detection portion 11 and the second detection portion 12 to the window portions (the rear glass 444 and the right side glass 443).

More specifically, the first bracket 51 is made of a metal plate and is fixed to the rear surface of the frame 45. The first bracket 51 is detachably fixed to the cabin 42 of the boarding room 4 using a fastener such as a bolt and/or a nut. The first detection portion 11 is supported by the first bracket 51 in a posture inclined slightly downward from the horizontal direction.

Similarly, the second bracket 52 is made of a metal plate and is fixed to the right side surface of the frame 45 (roof frame 451). The second bracket 52 is detachably fixed to the cabin 42 of the boarding room 4 using a fastener such as a bolt and/or a nut. The second detection portion 12 is supported by the second bracket 52 in a posture inclined slightly downward from the horizontal direction.

As illustrated in FIGs. 7 to 9, the upper end portions of the first detection portion 11 and the second detection portion 12 are located at substantially the same height as the cabin roof 426. As illustrated in FIGs. 7 to 10, the first detection portion 11 and the second detection portion 12 are provided so as to protrude outward (rearward or rightward) from the cabin 42 of the boarding room 4 in a plan view.

In the work machine 3 according to the present embodiment, as illustrated in FIG. 11, the detection region of the first detection portion (first detection region A1) and the detection region of the second detection portion 12 (second detection region A2) partially overlap with each other in a plan view. In the present embodiment, as an example, the first detection portion 11 is attached to the cabin 42 so as to face rearward, and thus the first detection region A1 is formed on the rear side of the cabin 42. The second detection portion 12 is attached to the cabin 42 so as to face rightward, and thus the second detection region A2 is formed on the right side of the cabin 42.

Thus, the first detection portion 11 and the second detection portion 12 can detect the presence or absence of a detection target on the lateral side (the left side or the right side) and the rear side that are likely to be a blind spot for the operator who rides in the boarding room 4.

Then, the right side portion of the first detection region A1 and the rear side portion of the second detection region A2 overlap with each other in a plan view. Thus, the detection target present in the overlapping region of the first detection region A1 and the second detection region A2 can be detected by both the first detection portion 11 and the second detection portion 12, and is less likely to be overlooked.

The first detection portion 11 and the second detection portion 12 can detect a specific object attached to the machine body 30 from different directions. The term "specific object" in the present disclosure is, for example, a structure that protrudes from the upper surface of the turning portion 32. In the present embodiment, an example of the specific object is the exhaust tail pipe 323 that is provided at the rear end portion of the top surface of the turning portion 32 so as to be shifted toward the side opposite to the cabin 42 (right side) in the width direction (the left-right direction D3).

In short, the positional relationship between the first detection portion 11 and the specific object is set such that the first detection portion 11 detects the specific object (the exhaust tail pipe 323) from the left side. On the other hand, the positional relationship between the second detection portion 12 and the specific object is set such that the second detection portion 12 detects the specific object (the exhaust tail pipe 323) from the front side. Thus, the first blind region Ab1 that is a blind spot for the first detection portion 11 due to the specific object and the second blind region Ab2 that is a blind spot for the second detection portion 12 due to the specific object can be shifted from each other, and a situation where the detection target cannot be detected due to the specific object can be avoided.

To be specific, the positional relationship between the first detection portion 11, the second detection portion 12, and the specific object is determined such that the feature for detecting the detection target is out of the overlapping region Ab10 between the first blind region Ab1 that is a blind spot for the first detection portion 11 due to the specific object and the second blind region Ab2 that is a blind spot for the second detection portion 12 due to the specific object. In the present embodiment, as an example, the positional relationship between the first detection portion 11, the second detection portion 12, and the specific object (the exhaust tail pipe 323) is determined such that the overlapping region Ab10 is located on the turning portion 32.

Thus, it is possible to prevent a failure in the detection of the detection target from occurring due to the "feature" for detecting the detection target overlapping with the overlapping region Ab10 between the first blind region Ab1 and the second blind region Ab2. For example, in a case where the detection target is a "person", when the head or the like of the "person" overlaps with the overlapping region Ab10, a failure in the detection of the detection target may occur. Therefore, in the present embodiment, in order to prevent such a failure in the detection, the "feature" of the detection target is provided so as not to overlap with the overlapping region Ab10.

In the present embodiment, the alarm device 36 and the like are placed on a corner portion C1 (right rear corner portion) of the cabin 42. The alarm device 36 and the like are fixed to the frame 45 constituting the cabin 42 of the boarding room 4 by using an attachment stay. More specifically, the alarm device 36 and the like are attached to the vertical frame 453 of the frame 45 that is located at the corner portion C1 (right rear corner portion) of the cabin 42.

### [3] Modifications

Modifications of Embodiment 1 will be listed below. The modified examples, which will be described below, can be applied in combination as appropriate.

The boarding room 4 is not limited to the cabin type and may be, for example, a canopy type or a floor type. The canopy type or floor type boarding room 4 does not include the door 43, but includes an entrance through which an occupant gets in and out of the boarding room 4. For example, the floor type boarding room 4 includes no structure on the upper side of the entrance, and thus the entrance is opened upward.

The configuration of the entrance such as the door 43 is not limited to the configuration in which the entrance is disposed on the left (left side) of the boarding room 4 as in Embodiment 1. That is, the entrance through which an occupant gets in and out of the boarding room 4 only needs to be disposed at least on one side of the boarding room 4 in the left-right direction D3, and may be disposed, for example, on the right (right side) of the boarding room 4 or on both sides of the boarding room 4 in the left-right direction D3.

It is not essential for the work machine 3 to be of the "ultra-small turning type" or the "rear ultra-small turning type".

The detection portions (the first detection portion 11 and the second detection portion 12) for detecting the detection target in the detection region around the machine body 30 may include, for example, a sensor such as a human sensor, a sonar sensor, a radar, or a light detection and ranging (LiDAR) sensor in addition to or instead of the camera and the distance measurement sensor.

The camera (the first camera 111 and the second camera 121) may include one, two, or four or more cameras (image sensors), and may capture an image by a camera capable of capturing an image in all directions from the work machine 3 such as, for example, an omnidirectional camera (360-degree camera).

The determination of whether the detection target is present in the detection region may be performed not by the detection portion (the first detection portion 11 and the second detection portion 12) but by, for example, the control device. In this case, based on the detection results of the detection portions (the first detection portion 11 and the second detection portion 12), for example, a captured image, an image obtained by processing (combining, coordinate conversion, or the like) the captured image, and/or a distance image may be displayed on the display device.

The detection target may include, in addition to or instead of the "person", a moving object such as a vehicle (including another work machine), a structure such as a wall or a pillar, a plant, an animal, a step, a groove, or another obstacle.

The specific object is not limited to the exhaust tail pipe 323, and may be, for example, the alarm device 36, the indicator lamp, and/or the light.

The power source of the work machine 3 is not limited to a diesel engine, and may be, for example, an engine other than a diesel engine, a motor (electric motor), or a hybrid power source including an engine and a motor (electric motor).

### (Supplementary notes to Invention)

Hereinafter, an outline of the invention extracted from the above-described embodiment will be described in supplementary notes. The components and processing functions described in the supplementary notes below may be selected and arbitrarily combined.

### Supplementary note 1

A work machine comprising:
a machine body having a boarding room in which an occupant can board; and
a first detection portion and a second detection portion that are supported by the boarding room and each detect a detection target around the machine body;
wherein each of the first detection portion and the second detection portion is provided on a corresponding one of a pair of side surfaces that are adjacent to each other with one corner portion of the boarding room interposed therebetween in a plan view.

### Supplementary note 2

The work machine according to Supplementary note 1, wherein
at least one of the first detection portion and the second detection portion is located between a center of each of the pair of side surfaces and the corner portion in a plan view.

### Supplementary note 3

The work machine according to Supplementary note 1 or 2, wherein
the boarding room is provided to be shifted toward one side in a widthwise direction of the machine body, and
the corner portion is located on an other side in the widthwise direction.

### Supplementary note 4

The work machine according to any one of Supplementary notes 1 to 3, wherein
the corner portion is located on a rear end side of the boarding room.

### Supplementary note 5

The work machine according to any one of Supplementary notes 1 to 4, wherein
the boarding room includes a vertical frame having a length along an up-down direction, and
the first detection portion and the second detection portion are adjacent to the vertical frame.

### Supplementary note 6

The work machine according to any one of Supplementary notes 1 to 5, wherein
the boarding room has a window portion on each of the pair of side surfaces and
the first detection portion and the second detection portion are located above the window portion.

### Supplementary note 7

The work machine according to any one of Supplementary notes 1 to 6, wherein
a detection region of the first detection portion and a detection region of the second detection portion partially overlap with each other in a plan view.

### Supplementary note 8

The work machine according to any one of Supplementary notes 1 to 7, wherein
the first detection portion and the second detection portion are capable of detecting a specific object attached to the machine body from different directions.

### Supplementary note 9

The work machine according to Supplementary note 8, wherein
a positional relationship among the first detection portion, the second detection portion, and the specific object is determined according to which a feature for detecting the detection target is out of an overlapping region of a first blind region that is a blind spot for the first detection portion due to the specific object and a second blind region that is a blind spot for the second detection portion due to the specific object.

### REFERENCE SIGNS LIST

3 work machine
4 boarding room
11 first detection portion
12 second detection portion
30 machine body
323 exhaust tail pipe (specific object)
443 right side glass (window portion)
444 rear glass (window portion)
453 vertical frame
A1 detection region (of the first detection portion)
A2 detection region (of the second detection portion)
Ab1 first blind region
Ab2 second blind region
Ab10 overlapping region
C1 corner portion
D3 left-right direction (width direction)
Ss1, Ss2 side surface

## Claims

1. A work machine comprising:
a machine body having a boarding room in which an occupant can board; and
a first detection portion and a second detection portion that are supported by the boarding room and each detect a detection target around the machine body;
wherein each of the first detection portion and the second detection portion is provided on a corresponding one of a pair of side surfaces that are adjacent to each other with one corner portion of the boarding room interposed therebetween in a plan view.

2. The work machine according to claim 1, wherein
at least one of the first detection portion and the second detection portion is located between a center of each of the pair of side surfaces and the corner portion in a plan view.

3. The work machine according to claim 1 or 2, wherein
the boarding room is provided to be shifted toward one side in a width direction of the machine body, and
the corner portion is located on an other side in the width direction.

4. The work machine according to claim 1 or 2, wherein
the corner portion is located on a rear end side of the boarding room.

5. The work machine according to claim 1 or 2, wherein
the boarding room includes a vertical frame having a length along an up-down direction, and
the first detection portion and the second detection portion are adjacent to the vertical frame.

6. The work machine according to claim 1 or 2, wherein
the boarding room has a window portion on each of the pair of side surfaces and
the first detection portion and the second detection portion are located above the window portion.

7. The work machine according to claim 1 or 2, wherein
a detection region of the first detection portion and a detection region of the second detection portion partially overlap with each other in a plan view.

8. The work machine according to claim 1 or 2, wherein
the first detection portion and the second detection portion are capable of detecting a specific object attached to the machine body from different directions.

9. The work machine according to claim 8, wherein
a positional relationship between the first detection portion, the second detection portion, and the specific object is determined according to which a feature for detecting the detection target is out of an overlapping region of a first blind region that is a blind spot for the first detection portion due to the specific object and a second blind region that is a blind spot for the second detection portion due to the specific object.
